# EUROPEAN PATENT APPLICATION

(11) **EP 4 155 695 A1**
(43) Date of publication of application: **29.03.2023**
(21) Application number: 22198222.6
(22) Date of filing: 28.09.2022
(51) Int. Cl.: G01J 5/04, G01J 5/06, G01J 5/02

(54) **SHEATH FOR EAR TEMPERATURE MEASUREMENT APPARATUS AND EAR TEMPERATURE MEASUREMENT DEVICE**

(30) Priority: 28.09.2021 CN 202111145978
(71) Applicant: Shenzhen Mindray Bio-Medical Electronics Co., Ltd., Shenzhen, Guangdong 518057 (CN)
(72) Inventor: YANG, Tao, Shenzhen, 518057 (CN); XU, Ziqian, Shenzhen, 518057 (CN); WU, Hongfeng, Shenzhen, 518057 (CN); XIE, Junhua, Shenzhen, 518057 (CN); JIAO, Kun, Shenzhen, 518057 (CN)
(74) Representative: KIPA AB

(57) **Abstract**

Embodiments provide a sheath for an ear temperature measurement apparatus and an ear temperature measurement device. When applied the sheath (400), an engaging element (200) of the ear temperature measurement apparatus is engaged and fixed with the sheath (400), so the sheath (400) is engaged and fixed with the ear temperature measurement apparatus. When the engaging element (200) moves toward a proximal end (A) of the ear temperature measurement apparatus, it pulls the sheath (400) to deform toward the proximal end of probe housing (110), so that the sheath (400) stores energy until the engaging element (200) is separated from the sheath (400), then the sheath (400) is ejected toward the distal end (B) under its own elasticity. The fixation and disassembly of the sheath (400) relative to the probe (100) requires no separate fixing and ejected structures and makes the structure simpler and the ejection operation more convenient.

## Description

### TECHNICAL FIELD

The disclosure relates to the technical field of ear temperature measurement and more particularly to a sheath for an ear temperature measurement apparatus and an ear temperature measurement device.

### BACKGROUND

Doctors, nurses, parents and medical service providers use a thermometer to measure a body temperature of a subject. For effective use, the thermometer reading needs to be accurate enough, and the reading is preferably from the internal or core temperature of the subject. Currently, there are glass thermometer, electronic thermometer, frontal thermometer and ear thermometer in the market. The glass thermometer usually takes several minutes to reflect the temperature of the human body, which also makes the subject uncomfortable. Moreover, the glass thermometer itself also brings environmental pollution, so is gradually be banned from production and use. Compared with the glass thermometer, although the measurement time of the electronic thermometer is shortened to about 30s and the accuracy has been improved, it still needs to be put into the mouth, rectum or armpit of the subject in the measurement, which also makes the subject uncomfortable. Although the frontal thermometer measures quickly, its measurement results are often affected by the ambient temperature of the subject due to the limitation of the measurement position, and its accuracy cannot meet the medical level requirement. The ear thermometer measures the temperature by sensing infrared radiation from the eardrum in the external auditory canal. The temperature of the eardrum accurately reflects the core temperature of the body, and this measurement method only takes a few seconds. Therefore, ear thermometer has gradually been recognized by medical service institutions.

General ear thermometers have a probe that can extend into the ear canal of the subject. In order to avoid cross infection during continuous measurements for multiple subjects, a disposable sheath is usually sheathed at the probe. After each subject is measured, the sheath is removed and replaced with a new sheath. The sheath needs to be fixed at the probe and can be easily removed during disassembly. Therefore, the usual sheath has a fixed structure for fixing the probe and an pushing structure for pushing an pushed structure of the ear thermometer, which makes the sheath structure more complicated.

### SUMMARY

In this disclosure, a sheath for an ear temperature measurement apparatus and an ear temperature measurement device are disclosure to show a sheath with a simpler structure.

Based on the above objective, an embodiment of this disclosure provides a sheath for an ear temperature measurement apparatus, including a cylindrical body which is provided with a first end and a second end which is opposite to the first end, wherein the first end of the cylindrical body is opened to form an opening through which a probe of the ear temperature measurement apparatus protrudes into the cylindrical body, the second end of the cylindrical body is closed and has a window which can transmit an infrared ray, wherein an inner circumference surface of the cylindrical body is provided with an engaging fitting part, which is configured to engage with an engaging element of the ear temperature measurement apparatus to install the sheath at the engaging element; wherein the engaging fitting part has a structure capable of being deformed toward a proximal end of the probe and finally disengaging from the engaging element under a pull of the engaging element.

In one embodiment, the engaging fitting part is a recess part which is arranged at the inner circumference surface of the cylindrical body.

In one embodiment, the recess part is distributed in a continuous annular shape at the inner circumference surface of the cylindrical body; or
the recess part includes a plurality of recess parts with gaps therebetween and the plurality of recess parts are distributed in a continuous annular shape at the inner circumference surface of the cylindrical body.

In one embodiment, a bendable part is connected to a side of the recess part which is adjacent to the opening, and when the engaging element drives the cylindrical body to deform toward a proximal end of the probe, the bendable part can be bent and deformed toward the cylindrical body.

In one embodiment, when the engaging element pulls the cylindrical body to deform toward the proximal end of the probe, the bendable part can be bent and deformed toward the cylindrical body.

In one embodiment, the bendable part is a transition part of an arc shape or a folded surface shape.

In one embodiment, an outer circumference surface of the cylindrical body is provided with an outer support which protrudes to separate two adjacent sheaths when a plurality of the sheaths are stacked.

In one embodiment, the outer support is arranged away from the recess part.

In one embodiment, the outer support includes a flange which is formed by protruding outward a back surface of a recess region of the recess part.

In one embodiment, a bendable part is connected to a side of the recess part which is adjacent to the opening, wherein the bendable part is located below the outer support and configured to contact the outer support of a lower sheath to separate two adjacent sheaths when the plurality of the sheaths are stacked.

In one embodiment, a wall thickness of the recess part is greater than a wall thickness of the second end of the cylindrical body.

In one embodiment, the sheath for an ear temperature measurement apparatus further includes an annular support which is arranged around the opening of the cylindrical body and connected with the cylindrical body, wherein the annular support is configured to abut against the ear temperature measurement apparatus when the cylindrical body is deformed toward the proximal end of the probe.

In one embodiment, a wall thickness of the annular support is greater than a wall thickness of the first end of the cylindrical body.

In one embodiment, the annular support has a planar annular surface.

In one embodiment, the annular support has a stepped annular surface, the annular surface includes a first annular surface which extends from a wall of the opening and a second annular surface which is arranged around the first annular surface, wherein the second annular surface extends and forms from the first annular surface, and the second annular surface deviates from the first annular surface toward a distal end of the probe.

In one embodiment, an inner wall of the recess part is defined by at least one curvature.

In one embodiment, an acute angle is formed between a tangent of any point at the inner wall of the recess part and an axis of the cylindrical body.

In one embodiment, the annular support is provided with a reinforcing rib.

In one embodiment, the reinforcing rib extends radially outward along a radial direction of the annular support.

Based on the above object, an embodiment of this disclosure provides an ear temperature measurement device, which includes an ear temperature measurement apparatus and the sheath according to any one of the above sheath;
wherein the ear temperature measurement apparatus includes:
a probe, which is configured to measure an ear temperature, wherein the probe comprises a probe housing which is provided with a proximal end and a distal end for protruding into an ear of a measured object, wherein the sheath is detachably sheathed at the probe housing;
an engaging element, which is engaged with the engaging fitting part of the sheath to engage the sheath onto the probe; and
a control mechanism, which is connected with the engaging element to control the engaging element to move toward the proximal end of the probe housing; wherein when the engaging element moves toward the proximal end of the probe housing, the engaging element pulls the sheath to deform toward the proximal end of the probe housing until the engaging element disengages from the sheath, thereby ejecting the sheath toward the distal end of the probe housing.

In one embodiment, the probe housing prevents heat transfer, and the probe further includes a heat conduction element and an infrared temperature sensor, which are installed inside the probe housing;
wherein the distal end of the probe housing is provided with an opening, the infrared temperature sensor is configured to receive infrared radiation from a part to be measured through the opening to measure a temperature of the part to be measured, and the infrared temperature sensor has a first end which faces the opening and a second end which faces away from the first end;
the heat conduction element is connected with the probe housing at the opening and extends from the opening to the second end of the infrared temperature sensor, so as to be thermally connected with the second end of the infrared temperature sensor to form a heat transfer path from the opening of the probe housing to the second end of the infrared temperature sensor, wherein heat at the opening is transmitted to the second end of the infrared temperature sensor through the heat transfer path, so as to reduce a temperature difference between the first end and the second end of the infrared temperature sensor.

The sheath of the above embodiment, when applied to an ear temperature measurement apparatus, the engaging element of the ear temperature measurement apparatus can be engaged and fixed with the sheath, so the sheath can be worn by the ear temperature measurement apparatus. When the engaging element moves toward the proximal end of the ear temperature measurement apparatus, the sheath can be pulled to deform toward the proximal end of the probe housing, so that the sheath can store energy until the engaging element is separated from the sheath, then the sheath can be ejected toward the distal end under its own elasticity. The fixation and disassembly of the sheath relative to the probe are realized through the engaging fitting part, which requires no separate arrangement of fixed structure and pushed structure, and makes the structure of the sheath simpler and the ejection operation more convenient.

### BRIEF DESCRIPTION OF THE DRAWINGS

FIG. 1 is a longitudinal sectional diagram of a sheath for an ear temperature measurement apparatus in an embodiment of this disclosure.
FIG. 2 is a structural diagram of a sheath in another embodiment of this disclosure.
FIG. 3 is a longitudinal sectional diagram of the sheath shown in FIG.2.
FIG. 4 is a structural diagram of control mechanism, engaging element, sheath and probe, when a sheath is fixed in an embodiment of this disclosure.
FIG. 5 is a sectional diagram of the structure shown in FIG.4.
FIG. 6 is a structural diagram of sheath, housing and probe, when a sheath is fixed in an embodiment of this disclosure.
FIG. 7 is a structural diagram of control mechanism, engaging element, sheath and probe, when a sheath is ejected in an embodiment of this disclosure.
FIG. 8 is a sectional diagram of the structure shown in FIG.7.
FIG. 9 is a structural diagram of sheath, housing and probe, when a sheath is ejected in an embodiment of this disclosure.
FIG. 10 is a structural diagram of control mechanism, engaging element, sheath and probe, when a manual control element is slidably arranged in an embodiment of this disclosure.
FIG. 11 is a structural diagram of the structure shown in FIG. 1 0 with a housing.
FIG. 12 is a structural diagram of control mechanism, engaging element, sheath and probe, when a manual control element is arranged above a housing in an embodiment of this disclosure.
FIG. 13 is a structural diagram of the structure shown in FIG.12 with a housing.
FIG. 14 is a structural diagram when two sheaths are stacked (in a sectional state) in an embodiment of this disclosure.
FIG. 15 is an enlarged sectional diagram of bendable part of sheath in an embodiment of this disclosure.
FIG. 16 is a sectional diagram showing engagement fitting between an engaging element and a sheath in an embodiment of this disclosure.
FIG. 17 is a structural diagram of reinforcing rib at a sheath in an embodiment of this disclosure.
FIG. 18 is a partial sectional diagram of the structure shown in FIG. 17.
FIG. 19 is a schematic diagram of an ear temperature measurement apparatus in an embodiment of this disclosure.
FIG. 20 is a sectional diagram showing an internal structure of probe in an embodiment of this disclosure.
FIG. 21 is a sectional diagram of a sheath worn by a probe in an embodiment of this disclosure.

### DESCRIPTION OF THE PREFERRED EMBODIMENTS

This disclosure will be further described in detail below through specific embodiments in combination with the accompanying drawings. In different embodiments, similar elements adopt associated similar reference numbers. In the following embodiments, many details are described in order to make this disclosure better understood. However, one skilled in the art can easily recognize that some of the features can be omitted in different cases, or can be replaced by other elements, materials and methods. In some cases, some operations related to this disclosure are not shown or described in the description, in order to avoid the core part of this disclosure being inundated by too many descriptions. For one skilled in the art, it is not necessary to describe these related operations in detail, as they can fully understand the relevant operations according to the description in this disclosure and the general technical knowledge in the art.

In addition, the features, operations, or features described in the specification may be combined in any appropriate manner to form various embodiments. At the same time, the steps or actions in the method description can also be exchanged or adjusted in order in a manner obvious to one skilled in the art. Therefore, the various sequences in the description and the drawings are only for the purpose of clearly describing a certain embodiment, and do not mean that they are necessary sequences. Unless it is otherwise specified that one of the sequences must be followed.

The terms "first", "second", etc., in the specification are operable to distinguish different objects, rather than to describe a specific order. In addition, the terms "connection", and "linkage" mentioned in this application include direct and indirect connection (linkage), unless otherwise specified.

Embodiments provide an ear temperature measurement device. In one embodiment, the ear temperature measurement device includes an ear temperature measurement apparatus and a sheath. The ear temperature measurement apparatus can measure an ear temperature of a measured subject and acquire the ear canal temperature of the measured subject. For example, it may be an ear thermometer that measures the temperature in the ear canal by infrared spectroscopy or other detection methods.

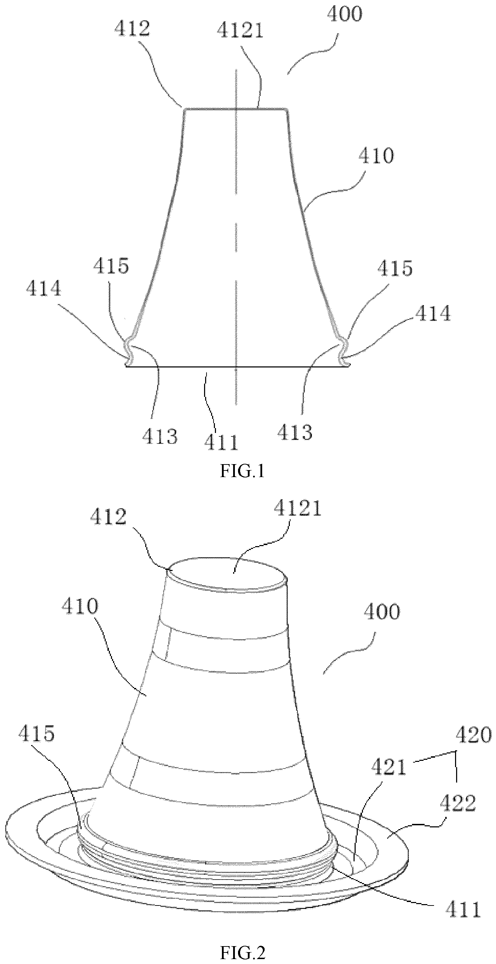

Please referring to FIGS. 1-13, in one embodiment, an ear temperature measurement apparatus includes a probe 100, an engaging element 200, and a control mechanism. The sheath 400 is sheathed at the ear temperature measurement apparatus to protect the probe of the ear temperature measurement apparatus. The sheath 400 may be disposable or usable for a limited number of times to avoid cross infection. The sheath 400 needs not only to be worn by the probe 100, but also to be easily removed when it is disassembled.

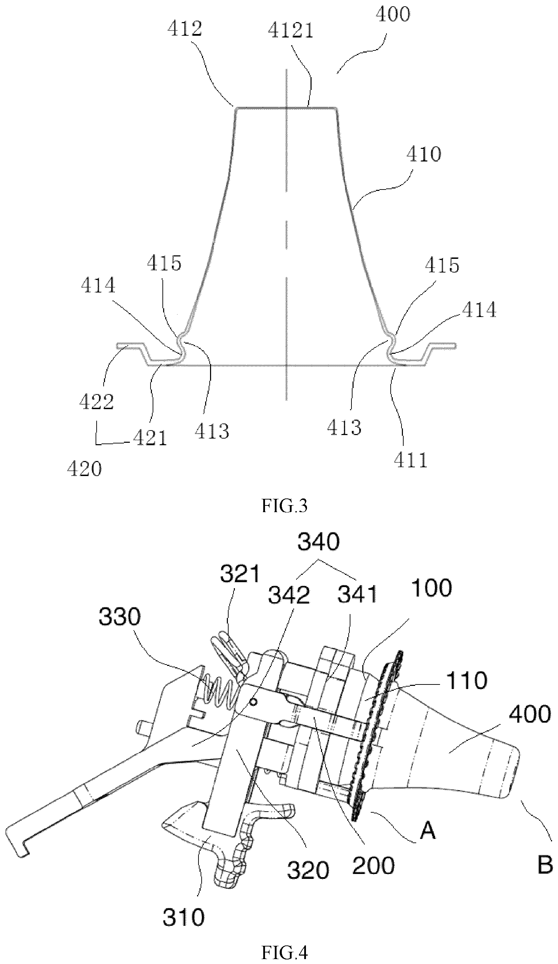

Among them, the probe 100 is configured to measure an ear temperature, and may have a structure that emits infrared spectrum or other detection media. Its structure may refer to the prior art. The probe 100 has a probe housing 110 for preventing heat transfer, and a receiving and transmitting unit or the likes of corresponding infrared spectrum or other detection medium is installed inside the probe housing 110. The probe housing 110 has a proximal end A and a distal end B for protruding into an ear canal of a measured subject, and the distal end B protrudes and extends from the proximal end A to one side. As shown in FIGS. 4-13, in some embodiments, the probe housing 110 is tapered or frustum shaped with a greater outer side and a smaller inner side (the distal end B facing the user is the outer side, and the proximal end A opposite to the distal end B is the inner side), so that the thinner distal end B protrudes into the ear canal of the measured object to reduce the discomfort of the measured object during measurement. Of course, the shape of the probe 100 is not limited to that shown in FIGS. 4-13, and may be other shapes.

Unlike the usual ear temperature measurement apparatus, in this embodiment, in order to be able to fix the sheath 400, the engaging element 200 has at least one engaging part 210, which engages and fits with the sheath 400 which is sheathed at the probe housing 110 to achieve detachable fixation. Please refer to FIGS. 4, 5, 7, 8, 10 and 12. In some embodiments, the engaging part 210 may be a clip. Of course, in addition to the illustrated clip structure, other types of engaging part 210 may also be used. In one embodiment, there may be two or more engaging elements, and the sheath 400 may be fixed from two or more positions to prevent the sheath 400 from falling off. As shown in FIGS. 4, 5 and 16, after the sheath 400 is sheathed at the probe housing 110, it can be engaged and fixed with the engaging element 200 to hold the sheath 400 at the probe housing 110.

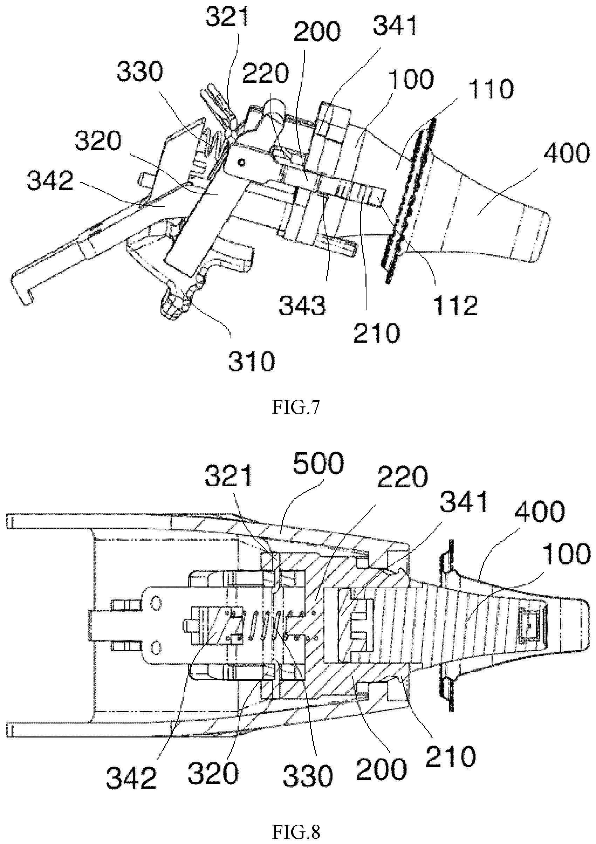

The engaging element 200 is configured to fix the sheath 400 and eject the sheath 400 to separate it from the probe 100, so that the user can easily remove the sheath 400. The control mechanism controls the engaging element 200 to move toward the proximal end A and the distal end B. Among them, there may be at least one engaging element 200, and the movements of these engaging elements 200 are all controlled by the control mechanism. An engaged position and a released position are provided on a movement path of the engaging element 200 moving toward the proximal end A. As shown in FIGS. 4, 5 and 16, when the engaging element 200 is in the engaged position, the engaging part 210 can be engaged and fixed with the sheath 400, and can pull the sheath 400 to deform toward the proximal end A during the movement of the engaging element 200, that is, the control mechanism drives the engaging element 200 to move in the engaged position, and drives the sheath 400 to deform toward the proximal end A, and the sheath 400 accumulates potential energy in this process. When the engaging element 200 is in the released position, the engaging part 210 is disengaged from the sheath 400. That is, when the engaging part 210 of the engaging element 200 is disengaged from the sheath 400, the engaging element 200 is switched from the engaged position to the released position, as shown in FIGS. 7, 8 and 9. At this time, the engaging element 200 is no longer engaged with the sheath 400, and the sheath 400 is quickly ejected in the opposite direction (that is, towards where the distal end B of the probe housing 110 is located) under its own elastic force, and falls at the distal end B of the probe housing 110. In some embodiments, the sheath 400 can accumulate enough potential energy, such that when the outward elastic force is large enough, the sheath 400 can be directly detached from the distal end B without removing the sheath 400 by hand. The engaged position and released position may be a certain position or a stroke.

In a normal ear temperature measurement apparatus, the sheath 400 is directly fixed to the probe housing 110, and a pushing mechanism pushes the sheath 400 toward the distal end B of the probe housing 110 to separate the sheath 400 from the probe housing 110. However, due to the elasticity of the sheath 400 itself, when the pushing mechanism pushes the sheath 400 outward, the sheath 400 can absorb part of the pushing force and displacement of the pushing mechanism, resulting in pushing failure. Accordingly, the sheath 400 cannot be separated from the probe housing.

In this embodiment, please refer to FIGS. 1-13. The ear temperature measurement apparatus first uses the engaging element 200 to engage the sheath 400 without fixing the sheath with the probe housing 110. When removing the sheath 400, the engaging element 200 can be separated from the sheath 400 by directly controlling the displacement of the engaging element 200, that is, when the engaging element 200 moves toward the proximal end A of the probe housing 110 and reaches a preset position, the sheath 400 naturally disengages from the engaging element 200 to release the fixation of the sheath 400, so that the sheath 400 can be easily ejected. At the same time, the ejection structure adopts the principle which is opposite to that of the normal ear temperature measurement apparatus. The movement of the engaging element 200 away from the distal end B drives the sheath 400 to deform toward the proximal end A of the probe housing 110 (the sheath 400 always is deformed toward the distal end B of the probe housing 110 in the normal pushing mechanism). The force applied to the sheath 400 is similar to the bow arm in archery. When the engaging element 200 moves to the released position, the engaging element 200 disengages from the sheath 400. At this time, the sheath 400 can not only release the locking state, but also store energy during the movement of the sheath 400 toward the proximal end A, so that it is quickly ejected in the opposite direction (i.e., towards where the distal end B of the probe housing 110 is located) under its own elastic force. It can be seen that in this embodiment, not only the connection relationship between the sheath 400 and the probe can be easily released, but also the sheath 400 can be ejected to a side where the distal end B is located by virtue of the reverse elastic force of the sheath 400, which makes it easier to remove the sheath 400.

This embodiment also specifically designs a sheath for this ejection-type sheath disassembly mode. Referring to FIGS. 1-3, in one embodiment, the sheath 400 includes a cylindrical body 410. The cylindrical body 410 has a first end 411 and a second end 412 which is opposite to the first end 411. The first end 411 of the cylindrical body 410 is opened to form an opening through which the probe 100 of the ear temperature measurement apparatus protrudes into the cylindrical body 410. The second end 412 of the cylindrical body 410 is closed and has a window 4121 that can transmit infrared rays, such as an IR transparent lens. The shape of the cylindrical body 410 matches the shape of the probe housing. For example, in the embodiment shown in FIGS. 1-3, the cylindrical body 410 may be provided with a tapered or frustum-shaped structure which matches that of the probe housing 110.

The inner circumference surface of the cylindrical body 410 is provided with an engaging fitting part which is configured to engage with the engaging element 200 of the ear temperature measurement apparatus to install the sheath 400 at the engaging element 200. The engaging fitting part has a structure that can be deformed toward the proximal end A of the probe 100 and finally separated from the engaging element 200 under the driving of the engaging element 200. That is, when the engaging element 200 is in the engaged position, the engaging fitting part can be well fixed with the engaging part 210 of the engaging element 200. When the engaging element 200 moves to the released position, the engaging fitting part can be separated from the engaging part 210 of the engaging element 200 under the selfdeformation of the cylindrical body 410.

In one embodiment, referring to FIGS. 1 and 3, the engaging fitting part is a recess part 413 which is arranged at the inner circumference surface of the cylindrical body 410. The recess structure of the recess part 413 can form a concaveconvex engagement fitting with the engaging part 210 of the engaging element 200 to fix the sheath 400. Of course, the engaging fitting part can also be designed as a convex structure, such as a bump, a raised point, a flange, etc. Correspondingly, the engaging part 210 of the engaging element 200 can also be designed as other structures that can match with the convex structure, such as a recess structure or another convex structure. The sheath 400 and the engaging element 200 are engaged and fixed, which not only ensures the stability of the fixed connection, but also facilitates the separation of the two under a certain external force, so as to realize the convenience of assembly and disassembly.

The recess part 413 may be a structure such as a hole or a groove etc., and the number thereof may be one or more. For example, in one embodiment, there can be a plurality of recess parts 413 with gaps therebetween, and the recess parts 413 are annularly distributed along the inner circumference surface of the cylindrical body 410, so as to match with the engaging element 200.

Referring to FIGS. 1 and 3, in one embodiment, the recess parts 413 are distributed in a continuous annular shape on the inner circumference surface of the cylindrical body 410. For example, it may be one or more rings of annular grooves formed by depressions of the inner circumference surface. Each portion of the recess part 413 can be configured to match with the engaging element 200, so that the sheath 400 requires no installation angle when installed. After the sheath 400 is sheathed, the engaging element 200 can be engaged into any area of the recess part 413. In some embodiments, the recess part 413 may be divided into several sections, and it is not necessary to form a closed state in the inner circumferential direction.

When there are a plurality of rings of annular grooves which are arranged coaxially, the sheath 400 can also be adapted to probes 100 of different lengths, and the engaging element 200 on the probe 100 can be fixed to the annular groove at different depths according to its own length. Of course, the annular groove can also be replaced by other forms of engaging fitting parts.

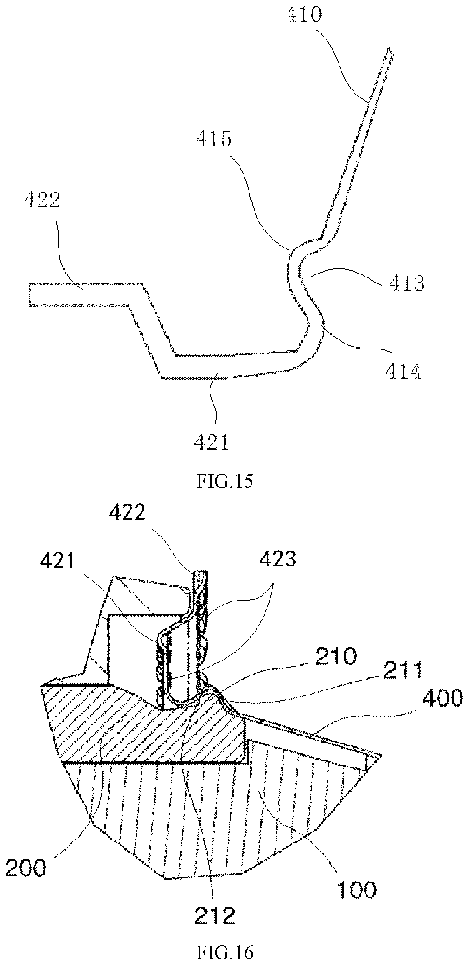

Further, please refer to FIGS. 3 and 15. In one embodiment, an inner wall of the recess part 413 is defined by at least one curvature. For example, the inner wall is an arc surface. The arc-shaped structure is more convenient for the recess part 413 to form an engaging fitting with the engaging element 200. When the engaging element 200 pulls the recess part 413 to deform, the overall deformation consistency of the recess part 413 is better. When the engaging element 200 moves to a specified position, it is easier to separate the engaging element 200 from the recess part 413.

Further, in some embodiments, an acute angle is formed between a tangent of any point at the inner wall of the recess part and an axis of the cylindrical body 410. In one embodiment, the inner wall is an arc-shaped surface, and an acute angle is formed between a tangent of any point at the inner wall of the recess part and an axis of the cylindrical body, means that an acute angle is formed between any portion of the recess part 413 and the axis of the cylindrical body 410, so as to avoid the recess part 413 from forming a surface which is perpendicular to the axis of the cylindrical body 410, because such surface further increases the difficulty of separating the engaging element 200 from the recess part 413.

Please refer to FIGS. 4, 5 and 16. In one embodiment, the engaging element 200 is fixed from the inner side of the sheath 400. However, in other embodiments, the engaging element 200 may fasten and fix the sheath 400 from the outside of the sheath 400.

Further, please refer to FIGS. 1-3 and 16. In order to better engage and fix with the sheath 400, in one embodiment, an end of the engaging part 210 which faces the sheath 400 has a bump, which is configured to engage and fix with the sheath 400. The bump has a guide surface 211 which is obliquely disposed rearward from a front end of the bump and an engaging platform structure 212 which is located behind the guide surface 211 to guide the recess part 413 of the sheath 400 to be engaged with the engaging platform structure 212. When the engaging element 200 moves to the released position, the engaging platform structure 212 can also drive the sheath 400 to deform toward the distal end B of the probe housing 110 until it is separated from the sheath 400, thereby ejecting the sheath 400.

Further, in order to disassemble the sheath 400 more easily, please refer to FIGS. 1-3 and 14. In one embodiment, a bendable part 414 is connected to a side of the recess part 413 which is adjacent to the opening. When the engaging element 200 pulls the cylindrical body 410 to deform toward the proximal end A of the probe 100, an end of the bendable part 414 which is away from the recess part 413 abuts against the ear temperature measurement apparatus, for example, abuts against the housing or other structures of the ear temperature measurement apparatus, so that the bendable part 414 can be bent and deformed, thereby making it easier to open the engaging fitting structure between the engaging element 200 and the recess part 413 and making it easier to detach the sheath 400 from the engaging element 200. At the same time, the bendable part 414 also accumulates energy in the process of bending and deformation. When the sheath 400 is separated from the engaging element 200, the bendable part 414 can provide a reverse elastic force to the sheath 400 under its own elastic resilient force to further help the sheath 400 to be ejected from the probe housing 110.

In one embodiment, please refer to FIGS. 15 and 16. When the engaging element 200 pulls the cylindrical body 410 to deform toward the proximal end A of the probe 100, the bendable part 414 is bent and deformed toward the cylindrical body 410, for example, it substantially deforms outward in the radial direction of the cylindrical body 410, thereby changing an opening shape of the recess part 413, making the opening of the recess part 413 larger, and the engaging element 200 can be more easily detached from the recess part 413. Of course, the bendable part 414 may be bent and deformed in other different directions as long as it can achieve similar or better effects.

Please refer to FIGS. 1, 3 and 15. In one embodiment, the bendable part 414 is a transition part of an arc shape or a folded surface shape. This transition portion can be folded and deformed in the axial direction of the cylindrical body 410, thereby accumulating energy for the sheath 400 to rebound. At the same time, during the folding process of the transition portion, the opening of the recess part 413 can be further opened, so that the sheath 400 can be more easily separated from the engaging element 200. The transition part of arc shape or folded surface shape may have one or more continuous bended structures.

Of course, the bendable part 414 is not limited to the shapes shown in FIGS. 1, 3, and 15. In order to increase the resilient force of the bendable part 414, the thickness of the bendable part 414 can be increased or reinforcing rib structure can be designed, so that the sheath 400 can be more easily rebounded when it is separated from the engaging element 200.

Further, in some embodiments, the wall thickness of the recess part 413 of the sheath 400 is greater than a wall thickness of a region (including the second end 412) of the cylindrical body 410, which region is at a side of the recess part 413 facing the second end 412, such that not only the sheath 400 can have good ductility and elasticity to be attached to the probe housing, but also the recess part 413 can have sufficient thickness and strength to enable the sheath 400 and the engaging element 200 to maintain a good fixing effect. At the same time, the thicker wall thickness of the recess part 413 is also conducive to storing more energy when the recess part 413 is deformed under the action of the engaging element 200, thereby increasing the resilient force of the sheath 400 to eject it out of the probe housing.

Further, in one embodiment, the control mechanism controls the movement of the engaging element 200 by an electrical signal or mechanical transmission mechanism. The control mechanism can transmit the external force inputted by the user to the engaging part 210 by pure mechanical transmission, as shown in FIG. 4-13. The control mechanism can also adopt the electronic control mode, and the user inputs an instruction to remove the sheath 400. The input of the instruction can be realized by physical keys, touch control, voice recognition, image recognition, action recognition, or even by sending electrical signals from other terminals. Then, the control unit controls the corresponding electrically controlled power component to output a signal so that the engaging part 210 drives the sheath 400 to move. For example, the electrically controlled power component may be an electromagnet, a motor, a cylinder, a hydraulic cylinder, etc.

One embodiment provides a mechanical control structure. Please refer to FIGS. 4, 7, 10 and 12. The control mechanism includes a manual control element 310 and a transmission mechanism. The manual control element 310 is in transmission connection with the engaging element 200 through the transmission mechanism to control the movement of the engaging element 200. The user inputs movement and force through the manual control element 310. The manual control element 310 can also adopt but not limited to common control elements, such as buttons, dials, triggers, push rods, knobs, etc. The transmission mechanism transmits the movement and force which are inputted by the manual control element 310 to the engaging element 200, and the transmission mode can be flexibly selected.

Please continue to refer to FIGS. 4-13. In one embodiment, the transmission mechanism includes a drive arm 320 and a resilient elastic element 330 (such as a spring or other forms of elastic elements). The manual control element 310 is in transmission connection with the drive arm 320. Specifically, the manual control element 310 is in transmission connection with the drive arm, including integral molding, fixed connection or movable connection in a manner which can transmit movement and force. The drive arm 320 is in transmission connection with the engaging element 200, and the resilient elastic element 330 is configured to drive the engaging element 200 to reset, specifically to drive the engaging element 200 to reset to the engaged position, so as to maintain the engaging element 200 at a position that can be fixed with the sheath 400. The manual control element 310 and the drive arm 320 may be composed of one or more components, respectively.

Please refer to FIGS. 4-13. In a more specific embodiment, the resilient elastic element 330 abuts between a support seat 340 and the engaging element 200 (or the drive arm 320). When the drive arm 320 drives the engaging element 200 to move toward the proximal end A of the probe housing 110, the resilient elastic element 330 is compressed, contracted and deformed, to accumulate energy. When the external force of the user disappears, the resilient elastic element 330 releases energy to push the drive arm 320 and the engaging element 200 to reset. Among them, the resilient force of the resilient elastic element 330 to the engaging element 200 is greater than the fastening force between the engaging element 200 and the sheath 400, so that the sheath 400 is stable and does not slide after being engaged and fixed.

In a more specific embodiment, please refer to FIGS. 4-9. The transmission mechanism includes a support seat 340. The drive arm 320 is rotationally connected to the support seat 340. The drive arm 320 is rotationally connected with the engaging element 200 in a self-adjustable manner, and converts the rotation of the drive arm 320 into a linear reciprocation movement of the engaging element 200. The support seat 340 may be used only to support the drive arm 320 and the engaging element 200, or may also be used as a support for other structures. For example, the probe 100 may also be supported on the support seat 340. Of course, other structures not shown in the ear temperature measurement apparatus may also be supported on the support seat 340.

Since the rotation path of the drive arm 320 conflicts with the linear reciprocation movement path of the engaging element 200, in order to ensure smooth linkage between these two, the drive arm 320 and the engaging element 200 are rotationally connected in a self-adjustable manner, and there are many self-adjustable ways to realize the movement conversion between these two. For example, in one embodiment, the drive arm 320 or the engaging element 200 is provided with elongated rotation fitting parts, such as elongated holes (such as waist-shaped holes), elongated grooves, or elongated protrusion, etc., such that the position of the rotation axis can be adaptively adjusted between the drive arm 320 and the engaging element 200. At the same time, the support seat 340 has a position-limiting part, which may be a linear guide part, such as a linear guide groove 343, a linear guide rail, a guide shaft, a guide hole, etc. The engaging element 200 is limited to the position-limiting part. Therefore, when the drive arm 320 rotates, the engaging element 200 can be driven to move on the position-limiting part. At the same time, the drive arm 320 and the engaging element 200 can automatically adjust the position of the rotation axis through the elongated rotation fitting part, thereby converting the rotation of the drive arm 320 into the linear reciprocation movement of the engaging element 200. In other embodiments, the probe housing 110 may also be provided with a position-limiting part and the engaging element 200 can be guided through the probe housing 110 or through the position-limiting part on the probe housing 110 and the support seat. For example, please refer to FIGS. 4-13. In one embodiment, the outer circumference surface of the probe housing 110 is provided with a position-limiting part which is arranged along a central axis direction of the probe housing 110, and the engaging part 210 is installed at the position-limiting part to define the movement path of the engaging part 210. In the structure shown in the figure, the position-limiting part is a position-limiting groove 112 which is provided along the central axis direction of the probe housing 110. The engaging element 200 is embedded inside the position-limiting groove 112, and the outer wall of the engaging element 200 is adjacent to the outer wall of the probe housing 110. This facilitates the installation of the sheath 400, and prevents the gap between the sheath 400 and the probe housing 110 from being too large due to excessive protrusion of the engaging element 200 on the probe housing 110.

Among them, please refer to FIGS. 4-9. In one embodiment, the rotation axis of the drive arm 320 relative to the support seat 340 is the first rotation axis. Taking the first rotation axis as the boundary, the manual control element 310 and the engaging element 200 are both directly or indirectly installed on the same side of the drive arm 320, so that a force arm of the manual control element 310 from the first rotation axis is greater than a force arm of an action point of the engaging element 200 or the resilient elastic element 330 from the first rotation axis. Thus, a force-saving structure is formed. When the user operates the manual control element 310, he/she can overcome the elastic force of the resilient elastic element 330 with as little force as possible, and drive the sheath 400 to deform toward the distal end B of the probe housing 110.

Please refer to FIGS. 4-9. In one embodiment, the resilient elastic element 330 does not directly act on the drive arm 320, but abuts against the engaging element 200 to drive the engaging element 200 to the engaged position. The rotation axis of the engaging element 200 relative to the drive arm 320 is the second rotation axis, and a force arm of the manual control element 310 from the first rotation axis is greater than a force arm of the second rotation axis from the first rotation axis, which forms a force-saving structure.

Further, please continue to refer to FIGS. 4-9. In a more specific embodiment, the support seat 340 has a first support seat 341 and a second support seat 342, wherein the first support seat 341 is fixedly connected to the proximal end A of the probe 100, the second support seat 342 is fixedly connected or integrally formed with the first support seat 341, and the drive arm 320 is rotatably connected to the second support seat 342. The resilient elastic element 330 abuts between the second support seat 342 and the engaging element 200 to provide a resilient elastic force. The drive arm 320 may be a bridging structure which is provided with two support legs. The two support legs bridge two sides of the support seat 340 (specifically, the second support seat 342) and are rotationally connected by corresponding rotation shafts. The two rotation shafts may be of an integrated structure, which is convenient for manufacturing. For example, as shown in Fig. 4-9, the two rotation shafts are formed by bending the same strip, such as a torsion spring shaft 321. Both of the two rotation shafts are fixed to the manual control element 310. The two support legs are arranged opposite to each other. When the user inputs a force from the manual control element 310, the two support legs can more stably transmit the force to the drive arm 320.

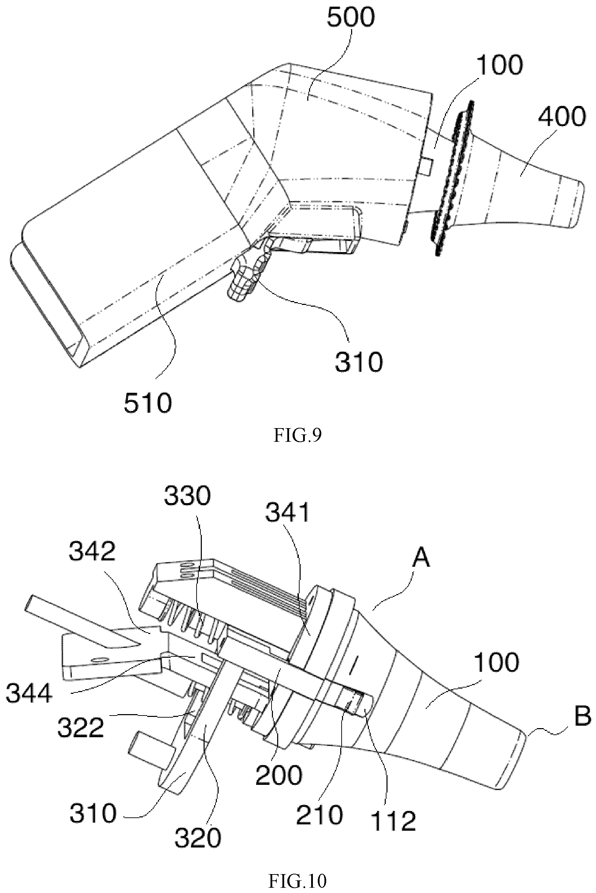

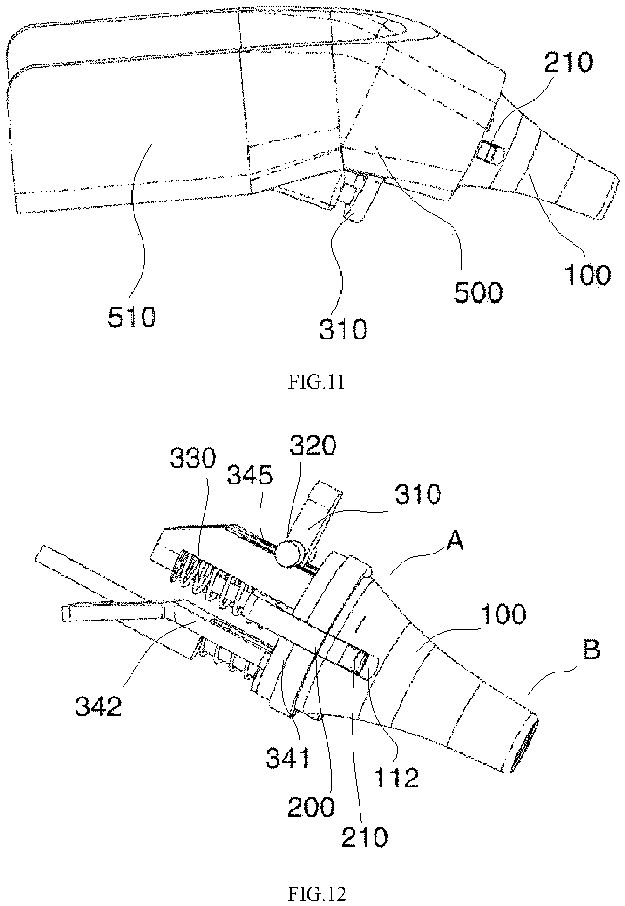

In other embodiments, the manual control element 310 and the drive arm 320 may also control the engaging element 200 in a slidable manner. For example, please refer to FIGS. 10 and 12. In some embodiments, the manual control element 310 is arranged to be slidable. The transmission mechanism includes the support seat 340, and the drive arm 320 is slidably arranged at the support seat 340 (including the first support seat 341 and the second support seat 342). In order to simplify the structure, in the structure shown in FIGS. 10 and 12, the sliding direction of the drive arm 320 is the same as the movement direction of the engaging element 200. The manual control element 310, the engaging element 200 and the drive arm 320 may be integrated, fixedly connected or movably connected in a manner which can transmit movement and force.

Please continue to refer to FIGS. 10 and 12. In some embodiments, the support seat 340 has a position-limiting part, and the drive arm 320 is installed inside the position-limiting part. The position-limiting direction of position-limiting part is consistent with the movement direction of the engaging element 200, so as to ensure that the movement direction of the drive arm 320 is consistent with the movement direction of the engaging element 200. As shown in FIG. 10, the position-limiting part may include a position-limiting block 344 that fits the position-limiting groove 322 at the drive arm 320. As shown in FIG. 12, the position-limiting part may include a position-limiting groove 345 into which the drive arm 320 is positioned. Of course, other types of position-limiting structures may be used for the position-limiting part.

In the scheme shown in FIGS. 10 and 12, the first support seat 341 is fixedly connected to the proximal end A of the probe 100, and the second support seat 342 is fixedly connected or integrally formed with the first support seat 341. The resilient elastic element 330 is installed between the first support seat 341 and the engaging element 200 or the drive arm 320. The difference is that in the scheme shown in FIG. 10, the manual control element 310 is arranged downward, and it is exposed below the housing 500 (the housing 500 will be described in more detail later) for a lower position to facilitate the operation of the user with the index finger. In the scheme shown in FIG. 12, the manual control element 310 is arranged upward, and is exposed above the housing 500, so as to facilitate the operation of the user with the thumb.

Further, in the embodiments shown in FIGS. 4-13, the engaging element 200 mainly moves in a straight line. In other embodiments, when the engaging element 200 moves toward the proximal end A of the probe housing 110, its movement path may be other shapes, such as arc shape, broken line shape or other shapes, as long as it can drive the sheath 400 to deform toward the distal end B of the probe housing 110.

Further, a position-limiting structure may be provided at any position of the manual control element 310, the drive arm 320 and the engaging element 200, so as to limit the movement distance of the manual control element 310, the drive arm 320 and the engaging element 200 as a whole, and further prevent the manual control element 310, the drive arm 320 and the engaging element 200 from moving excessively.

Further, in order to eject the sheath 400 more easily, in some embodiments, the engaging element 200 has at least two engaging parts 210, which are distributed at different positions of an outside wall of the probe housing 110 along the outer circumferential direction of the probe housing 110, and then force the sheath 400 together from different positions of the sheath 400 to eject it.

Referring to FIGS. 4-13, the two engaging parts 210 are arranged side by side, and the sheath 400 is ejected outward from the two positions side by side. Further, the engaging element 200 shown in the figure also has a connection part 220 (a portion between the two engaging parts 210). The engaging parts 210 are both connected to the connection part 220 to form a claw structure, which extends from the proximal end A of the probe housing 110 to the outside of the probe housing 110.

In some embodiments, when there are two or more engaging parts 210, the distribution position of the engaging parts 210 may be rotationally symmetric along the central axis of the probe housing 110, so that the ejection points are evenly distributed at the outer circumference of the probe housing 110, and the sheath 400 can be ejected more effectively.

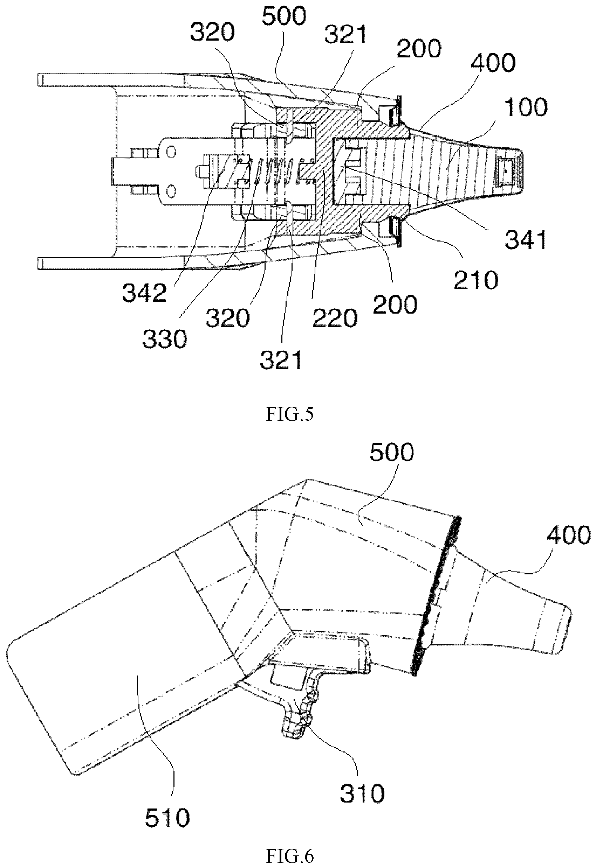

Further, referring to FIGS. 6, 9, 11 and 13, the ear temperature measurement apparatus includes a housing 500. In FIGS. 6, 9, 11 and 13, only a portion of the housing 500 is schematically drawn, but this does not affect the understanding of the present scheme. In fact, the housing 500 in this scheme can adopt the structure of the existing housings 500 of the same or similar products. The housing 500 has an installation cavity for installing various related structures, such as a circuit board, a battery, and the like. The installation cavity has an outlet of the probe 100, the proximal end A of the probe housing 110 is located inside the installation cavity, and the distal end B of the probe housing 110 protrudes out of the housing 500 from the outlet of the probe 100.

Considering that most of the existing pushing structures are directly exposed on the housing 500, they are not only unsightly, but also easy to be damaged. Therefore, please refer to FIGS. 6, 9, 11 and 13. In one embodiment, the transmission mechanism is located in the installation cavity. The manual control element 310 is provided at the housing 500. At least a portion of the manual control element 310 is located outside the housing 500. For example, the manual control element 310 may mainly leave the portion that is contacted by the finger of the user outside the housing 500, and the other portions are housed inside the housing 500. This embodiment is more concise and beautiful on the whole, and the transmission mechanism can be protected from damage due to touching, corrosion and other reasons when the transmission mechanism is placed inside the housing 500.

Further, please refer to FIGS. 6, 9 and 11. In one embodiment, the housing 500 has a holding part 510 (only a portion of the holding part 510 is shown) for the user to hold. At least a portion of the manual control element 310 is located below the housing 500, so that the index finger of the user can control the manual control element 310. This design is more ergonomic and more comfortable for the user to use.

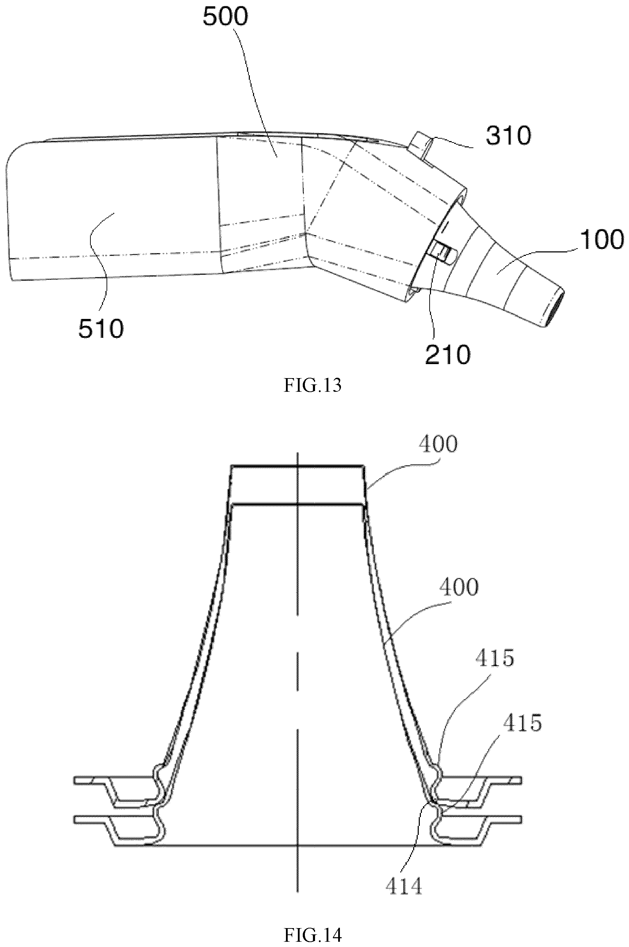

In other embodiments, the manual control element 310 may also be arranged at other positions. For example, please refer to FIG. 13. The housing 500 has a holding part 510 for the user to hold. At least a portion of the manual control element 310 is located above the housing 500. In particular, when the manual control element 310 is slidably disposed, it is more convenient for the user to operate the manual control element 310 with his thumb by disposing it above the holding part 510 of the housing 500.

Further, the pressing part of the existing pushing mechanism is integrally formed with the plastic pushing housing, and it cannot be made too long (because it needs to form a lever structure, which reduces the hardness and is easily to break when pressed, if made too long). Therefore, the pressing part is usually very close to the probe 100, that is, the front end of the housing 500, which is far away from the holding part. It is very inconvenient for the user to press when using. In this embodiment, a transmission mechanism is configured to transmit force and movement, so the position of the manual control element 310 is not limited by materials and structures, and can be designed according to ergonomic requirements. As shown in FIGS. 6, 9, 11 and 13, it is arranged at a position more suitable for the finger operation of the user when hold by the user.

On the other hand, as shown in FIG. 14, the sheath 400 is generally packaged and transported in a stacked manner. However, when the sheath 400 is taken out of the package and worn by the ear temperature measurement apparatus, the operator needs to go through cumbersome operation steps. Usually, the operator takes out the sheath 400 one by one from the package box and then puts each sheath on the ear temperature measurement apparatus, which increases the chance of the hand of the operator to contact the sheath 400 and is not conducive to preventing cross infection.

In this regard, please refer to FIGS. 1-3 and 14. In one embodiment, the outer circumference surface of the cylindrical body 410 has an outer support 415 which protrudes to separate two adjacent sheaths 400 when a plurality of the sheaths 400 are stacked. The two adjacent sheaths 400 stacked together are contacted and supported by the outer support 415, wherein the contact between the two adjacent sheaths is point contact, line contact or surface contact, which can reduce the contact area and prevent the adjacent sheaths 400 from being pressed together.

Referring to FIGS. 3, 14 and 15, in one embodiment, a bendable part 414 is connected to the side of the recess part 413 which is adjacent to the opening. The bendable part 414 is located below the outer support 415. As shown in FIG. 14, the bendable part 414 is configured to contact the outer support 415 of the lower sheath when the plurality of sheaths 400 are stacked to separate the adjacent two sheaths 400.

When engaging with the sheath 400, the ear temperature measurement apparatus without the sheath 400 directly protrudes into the package box, and the uppermost sheath 400 in the package box is automatically attached to the ear temperature measurement apparatus by pressing, and the remaining sheaths 400 in the package box are separated by the outer support 415, and are not deformed or attached together due to the pressing. In the next time when the head of the ear temperature measurement apparatus protrudes into the package box to take way the next sheath 400, the next sheath 400 can be easily taken way. Each time the sheath 400 is taken out, only the uppermost sheath 400 is taken out, and no extra sheath 400 is taken out.

The outer support 415 may be provided at various positions at the outer circumference surface of the cylindrical body 410, as if it can serve to separate the two stacked sheaths 400. Please refer to FIG. 1, FIG. 3 and FIG. 13. In one embodiment, the outer support 415 is arranged away from the recess part 413.

Please refer to FIGS. 1-3. In a more specific embodiment, the outer support 415 includes a flange formed by protruding outward a back surface of the recess region of the recess part 413. This design is convenient for processing. When the recess part 413 is formed by injection molding, the outer support 415 can be formed synchronously.

In some embodiments, the thickness of the recess part 413 is greater than that of other parts. This relatively greater thickness can make the outer support 415 have better support strength and not easy to deform, further preventing the sheath 400 from deforming or sticking together due to pressing when they are stacked.

Further, please refer to FIGS. 1-3 and 15. In one embodiment, the sheath 400 further includes an annular support 420. The annular support 420 is arranged around the opening of the cylindrical body 410 and connected with the cylindrical body 410, so that when the cylindrical body 410 is deformed toward the proximal end A of the probe 100, the annular support 420 can abut against the ear temperature measurement apparatus (such as the housing 500, the probe housing 110 or other structures of the ear temperature measurement apparatus). Thus, when the engaging element 200 drives the sheath 400 to deform toward the proximal end A of the probe 100, the sheath 400 is provided with a supporting force from the annular support 420 toward the distal end B of the probe 100, so that the sheath 400 is compressed and deformed toward the middle area to store energy, which is more conducive to ejecting the sheath 400 after the sheath 400 is separated from the engaging element 200.

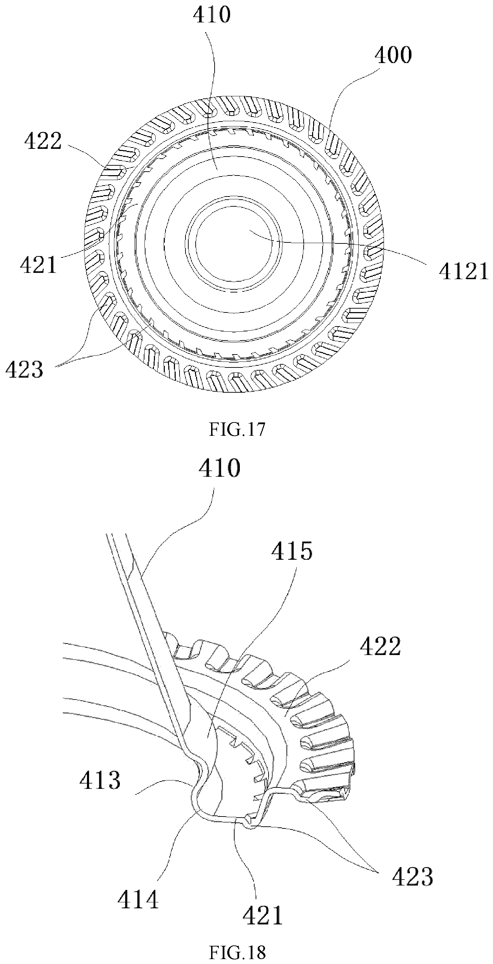

In order to improve the support effect, increase the strength and improve the effect of energy accumulation, in one embodiment, the wall thickness of the annular support 420 is greater than the wall thickness of the first end 411 of the cylindrical body 410. Alternatively, referring to FIGS. 17 and 18, some reinforcing ribs 423 may be added to some or all areas of the annular support 420. For example, the reinforcing ribs 423 may extend radially, obliquely side by side, or in other shapes outward along the radial direction of the annular support 420.

Please refer to FIGS. 1-3 and 15. In one embodiment, the annular support 420 has a stepped annular surface. The annular surface includes a first annular surface 421 which is connected to a wall of the opening and a second annular surface 422 which is arranged around the first annular surface 421. The first annular surface 421 and the second annular surface 422 are connected, and the second annular surface 422 deviates from the first annular surface 421 toward the distal end of the probe 100. The first annular surface 421 and the second annular surface 422 may contact and support different structures at the ear temperature measurement apparatus.

In some embodiments, the annular support 420 may also have a planar annular surface. That is, the first annular surface 421 and the second annular surface 422 are one annular surface in the same plane.

In addition to the stretchable ejection structure shown in this embodiment, the annular support 420 also enables the sheath 400 to be applied to a normal pushing structure. The pushing mechanism that moves outward (toward the distal end B of the probe 100) in the ear temperature measurement structure can abut against the annular support 420 and push the annular support 420 and the entire sheath 400 to move toward the distal end of the probe 100, thereby separating the sheath 400 from the probe 100.

Of course, in some embodiments, the annular support 420 may be omitted. When the engaging element 200 drives the sheath 400 to deform toward the proximal end A of the probe 100, the sheath 400 may not contact other structures of the ear temperature measurement apparatus and be supported. The sheath 400 may be directly contacted with and supported by other structures of the ear temperature measurement apparatus through the above described bendable part 414 or the engaging fitting part.

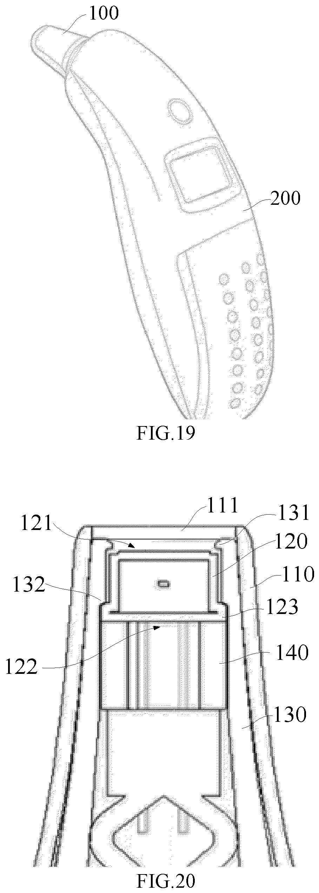

Further, please refer to FIGS. 19-21. An embodiment of the present application also provides another ear temperature measurement apparatus, including a probe 100 and a main body 600 which is connected to the probe 100. Generally, the main body 600 has a housing 500 (referring FIGS. 6, 9, 11 and 13) that is convenient to hold. The user holds the housing 500 to insert the probe 100 into the ear canal for temperature measurement.

The probe 100 includes a probe housing 110 for preventing heat transfer, a heat conduction element 130 and an infrared temperature sensor 120 which are installed inside the probe housing 110. At least one electronic component, which is electrically connected to the infrared temperature sensor 120, is provided inside the main body 600 to output a temperature of a part to be measured by the infrared temperature sensor 120. The electronic component includes but is not limited to necessary electronic components or modules which are formed by physical and/or signal connection of electronic components to complete the function of the ear temperature measurement apparatus, such as various board cards, circuit boards, batteries, etc.

The probe housing 110 has a proximal end which is connected to the main body 600. The connection between the probe housing 110 and the main body 600 has a broad meaning, such connection can be either integral formation with the main body 600 or detachably connection with the main body 600, for example, by screw connection. In addition, the probe housing 110 also has a distal end which protrudes outward from the main body 600, and the distal end is provided with an opening 111. To facilitate inserting into a deeper position of the ear canal, the probe housing 110 may be provided as a cone which takes the distal direction of the probe housing 110 as a tip direction. One of the functions of the probe housing 110 is to isolate external heat. An inner cavity of the probe housing 110 is connected with the outside through the opening 111 at the distal end, and the heat outside the probe housing 110 enters the inner cavity of the probe housing 110 through the opening 111.

The infrared temperature sensor 120 is configured to receive infrared radiation from the part to be measured through the opening 111 to measure the temperature of the part to be measured. Specifically, the infrared temperature sensor 120 has a first end 121 which faces the opening 111 and a second end 122 which faces away from the first end 121. The window of the infrared temperature sensor 120 is arranged at the first end 121, the infrared radiation from the ear canal reaches the window of the infrared temperature sensor 120 after passing through the opening 111 of the probe housing 110.

The heat conduction element 130 has a tapered sheath structure, and is sheathed inside the probe housing 110 and attached to the probe housing 110 at the opening 111 of the probe housing 110. The material of the heat conduction element 130 has high thermal conductivity (e.g., metal), and the material of the probe housing 110 has low thermal conductivity. The high thermal conductivity and low thermal conductivity in this disclosure are the definitions of the thermal conductivity commonly understood in the art, and are also the definitions of the relative relationship between the thermal conductivity of the probe housing 110 and the heat conduction element 130, that is, the thermal conductivity of the heat conduction element 130 is higher than the thermal conductivity of the probe housing 110. The heat conduction element 130 extends from the opening 111 to the second end 122 and is thermally connected to the second end 122 to form a heat transfer path from the opening 111 of the probe housing 110 to the second end 122. The heat at the opening 111 of the probe housing 110 is transmitted to the second end 122 of the infrared temperature sensor 120 through the heat transfer path to reduce a temperature difference between the first end 121 and the second end 122 of the infrared temperature sensor 120. In this embodiment, as shown in FIG. 20, one end of the heat conduction element 130 which is adjacent to the opening 111 of the probe housing 110 is below the opening 111 of the probe housing 110, that is, it never extends out of the probe housing 110. In other embodiments, the end of the heat conduction element 130 may be flush with the opening 111 of the probe housing 110 or extend out of the opening 111 of the probe housing 110. The other end of the heat conduction element 130 (the end away from the opening 111 of the probe housing 110) extends to a position which is adjacent to the main body 600. In other embodiments, the other end of the heat conduction element 130 may only extend to a position which is adjacent to the second end 122 of the infrared temperature sensor 120 or to other positions. In addition, the heat conduction element 130 also has a cone structure. The coned heat conduction element 130 and the coned probe housing 110 are attached together or almost attached together near the opening 111 near the probe housing 110, so that heat can be prevented from entering the gap between the heat conduction element 130 and the probe housing 110.

In some embodiments, the inner wall of the heat conduction element 130, which is adjacent to the opening 111 of the probe housing 110 protrudes inward to form a heated protrusion 131. The heat entering the opening 111 is transmitted to the heat transfer path by the heated protrusion 131, and then transmitted to the second end 122 of the infrared temperature sensor 120 by the heat transfer path. The heated protrusion 131 can form a circular disk in the horizontal direction. The heated protrusion 131 can absorb more infrared energy from the measured object (such as the ear canal), so that the temperature of the second end 122 of the infrared temperature sensor 120 is closer to the temperature of the first end 121.

The heat transfer path formed by the heat conduction element 130 of the high thermal conductivity material transmits the heat at the opening 111 to the second end 122 of the infrared temperature sensor 120 accurately and with a small error, thereby reducing the measurement error of the probe 100.

The heat conduction connection between above-mentioned heat conduction element 130 and the second end 122 of the infrared temperature sensor 120 can be implemented in various ways, such as in direct contact heat conduction connection or indirect contact heat conduction connection, which is described by way of example below.

In some embodiments, the second end 122 of the infrared temperature sensor 120 is directly adhered to the inner wall of the heat conduction element 130 through a heat conduction adhesive, thereby completing the heat conduction connection with the heat conduction element 130.

In some embodiments, the ear temperature measurement apparatus further includes a heat insulation support 140. The inner wall of the heat conduction element 130 protrudes inward to form a first boss 132, the second end 122 of the infrared temperature sensor 120 protrudes outward to form a second boss 123 which matches with the first boss 132, the heat insulation support 140 is fixedly installed inside the probe housing 110. One end of the heat insulation support 140 abuts against the second end 122 of the infrared temperature sensor 120, and applies a force to the infrared temperature sensor 120 to press the second boss 123 against the first boss 132. In this way, the heat conduction element 130 and the infrared temperature sensor 120 are overlapped by the first boss 132 and the second boss 123 to fix the infrared temperature sensor 120. In some embodiments, there is an air gap and/or a heat insulation medium between the heat conduction element 130 and the infrared temperature sensor 120 except the overlap joint between the first boss 132 and the second boss 123, that is, the infrared temperature sensor 120 is thermally connected to the heat conduction element 130 only through the second end 122, so as to avoid heat loss.

In some embodiments, the heat insulation support 140 may be an elastic support made of a heat insulation material. One end of the elastic support is connected to the main body 600 for fixation, and the other end abuts against the second end 122 of the infrared temperature sensor 120. In other embodiments, the heat insulation support 140 includes a spring and a heat insulation element. The spring is fixedly installed inside the probe housing 110, and one end of the spring presses the heat insulation element against the second end 122 of the infrared temperature sensor 120 through its own elastic force.

In some embodiments, the material of the heat insulation support 140 may be a filling foam or other material with low thermal conductivity, which plays a support role after fixation, or it may be a liquid glue of epoxy resin.

In addition to the above two types of heat conduction connection between above-mentioned heat conduction element 130 and the second end 122 of the infrared temperature sensor 120, in other embodiments, the inner wall of the heat conduction element 130 is provided with a first installation structure, the second end 122 of the infrared temperature sensor 120 is provided with a second installation structure, and the infrared temperature sensor 120 is fixed to the heat conduction element 130 through the fitting of the first installation structure and the second installation structure. For example, the first installation structure is a clamping slot provided at the inner wall of the heat conduction element 130, and the second installation structure is a heat conduction clamping claw provided at the second end 122 of the infrared temperature sensor 120. For example, the inner wall of the heat conduction element 130 is provided with an internal thread, the side wall of the second end 122 of the infrared temperature sensor 120 is provided with an external thread, and the second end 122 of the infrared temperature sensor 120 is threadedly connected with the heat conduction element 130, Other examples of the first installation structure and the second installation structure are not described here.

When the ear temperature measurement apparatus is in use, the probe housing 110 can be directly inserted into the ear canal to complete the temperature measurement. For the sake of more safety and hygiene, in some embodiments, the ear temperature measurement apparatus further includes a sheath 400, which is detachably sheathed at the probe housing 110. For example, the sheath 400 can be used once, making the ear temperature measurement apparatus safer and hygienic. It should be noted that the probe housing 110 of this disclosure can isolate heat and prevent ambient temperature from affecting the measurement of the infrared temperature sensor 120, so the sheath 400 does not need to have a heat insulation function, that is, the sheath 400 can be made thinner than the sheath 400 used in other ear temperature measurement apparatus, thereby reducing the cost of consumables.

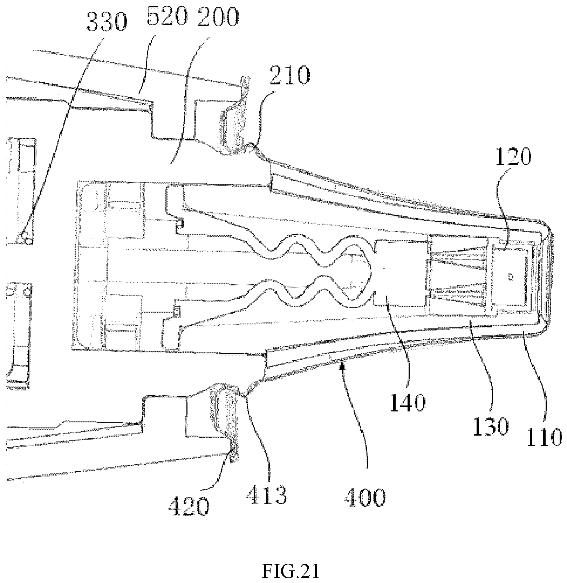

In some embodiments, the sheath 400 may be made of an elastic material and worn by the probe housing 110 through its own deformation. In other embodiments, the ear temperature measurement apparatus further includes an engaging element 200, which is provided at the main body 600. The engaging element 200 is configured to eject the sheath 400 which is sheathed at the probe housing 110 from the probe housing 110, so as to separate the sheath 400 from the probe housing 110. As shown in FIG. 21, one embodiment of the engaging element 200 is an example of the engaging element 200.

As shown in the previous embodiments, the activities of the engaging element 200 can be controlled by the control mechanism. The housing 500 has a fixed end 520, which is connected to the main body 600 and provided with a through-hole inside the fixed end 520. The engaging element 200 passes through the through-hole and is connected with the main body 600 through the resilient elastic element 330. By applying a force along the axial direction of the resilient elastic element 330 to the engaging element 200, the engaging element 200 can be controlled to reciprocate in the through-hole of the fixed end 520. The end of the engaging element 200 which is adjacent to the opening 111 of the probe housing 110 protrudes outward to form an engaging part 210 which is inclined toward the main body 600.

FIG. 21 is a schematic diagram of the sheath 400 which is worn by the probe housing 110. The sheath 400 as a whole has a conical structure like the probe housing 110. The right end of the sheath 400 in this figure may be referred to as the second end of the sheath 400, and the left end of the sheath 400 in this figure may be referred to as the first end of the sheath 400. The first end of the sheath 400 extends outward to form an annular support 420, and the side wall of the sheath 400 which is adjacent to the first end is concave inward to form a recess part 413 that fits with the engaging part 210.

The process of fitting the sheath 400 to the probe housing 110 is to move the sheath 400 so that the probe housing 110 enters the sheath 400 from the first end of the sheath 400. Since the sheath 400 is elastic, the sheath 400 is stretched during the movement, so that the recess part 413 at the sheath 400 is deformed to fit with the engaging part 210, so that the sheath 400 is fixed to the probe housing 110.

The process of ejecting the sheath 400 from the probe housing 110 is as follows. As shown in FIG. 21, a leftward force is applied to the engaging element 200. During the leftward movement of the engaging element 200, the recess part 413 of the sheath 400 is also moved leftward. At this time, the annular support 420 is bent and deformed because it abuts against the fixed portion and cannot move. After the engaging element 200 moves to a certain position, it is separated from the sheath 400, and the sheath 400 is ejected by the energy storage of the cylindrical body 410 and the annular support 420.

The present disclosure also provides a probe 100 for a temperature measurement apparatus. The probe 100 is different from the probe 100 for the ear temperature measurement apparatus described above in that it can be used in other temperature measurement apparatus, and the shape of the probe housing 110 of the probe 100 can be changed according to the application, and is not limited to the cone.

The probe of the above embodiment realizes the accurate conduction of heat through the heat transfer path formed by the heat conduction element, reduces the temperature difference between the two ends of the infrared temperature sensor, and makes the measurement more accurate. In addition, the ear temperature measurement apparatus described above has low cost and is convenient to use.

The above description is only the specific embodiments of the present disclosure, and the present disclosure is not limited to these specific embodiments. Those skilled in the art can make various changes and modifications to the present disclosure without departing from the spirit and scope of the present disclosure.

## Claims

1. A sheath for an ear temperature measurement apparatus, **characterized in that**, comprising:
a cylindrical body which is provided with a first end and a second end which is opposite to the first end, wherein the first end of the cylindrical body is opened to form an opening through which a probe of the ear temperature measurement apparatus protrudes into the cylindrical body, the second end of the cylindrical body is closed and has a window which can transmit an infrared ray, wherein an inner circumference surface of the cylindrical body is provided with an engaging fitting part, which is configured to engage with an engaging element of the ear temperature measurement apparatus to install the sheath at the engaging element and is configured to be deformed toward a proximal end of the probe and finally be disengaged from the engaging element under a pull of the engaging element.

2. The sheath according to claim 1, **characterized in that**, the engaging fitting part is a recess part which is arranged at the inner circumference surface of the cylindrical body.

3. The sheath according to claim 2, **characterized in that**, the recess part is distributed in a continuous annular shape at the inner circumference surface of the cylindrical body; or
the recess part comprises a plurality of recess parts with gaps therebetween and the plurality of recess parts are distributed in a continuous annular shape at the inner circumference surface of the cylindrical body.

4. The sheath according to claim 2, **characterized in that**, a bendable part is connected to a side of the recess part which is adjacent to the opening, and when the engaging element drives the cylindrical body to deform toward the proximal end of the probe, the bendable part can be bent and deformed toward the cylindrical body.

5. The sheath according to claim 2, **characterized in that**, an outer circumference surface of the cylindrical body is provided with an outer support which protrudes to separate two adjacent sheaths when a plurality of the sheaths are stacked.

6. The sheath according to claim 5, **characterized in that**, the outer support comprises a flange which is formed by protruding outward a back surface of a recess region of the recess part.

7. The sheath according to claim 5, **characterized in that**, a bendable part is connected to a side of the recess part which is adjacent to the opening, wherein the bendable part is located below the outer support and configured to contact the outer support of a lower sheath to separate two adjacent sheaths when the plurality of the sheaths are stacked.

8. The sheath according to claim 2, **characterized in that**, a wall thickness of the recess part is greater than a wall thickness of the second end of the cylindrical body.

9. The sheath according to any one of claims 1-8, **characterized in that**, the sheath further comprises an annular support which is arranged around the opening of the cylindrical body and connected with the cylindrical body, wherein the annular support is configured to abut against the ear temperature measurement apparatus when the cylindrical body is deformed toward the proximal end of the probe.

10. The sheath according to claim 9, **characterized in that**, a wall thickness of the annular support is greater than a wall thickness of the first end of the cylindrical body.

11. The sheath according to claim 9, **characterized in that**, the annular support has a planar annular surface.

12. The sheath according to claim 9, **characterized in that**, the annular support has a stepped annular surface, the annular surface comprises a first annular surface which extends from a wall of the opening and a second annular surface which is arranged around the first annular surface, wherein the second annular surface extends and forms from the first annular surface, and the second annular surface deviates from the first annular surface toward a distal end of the probe.

13. The sheath according to claim 2, **characterized in that**, an inner wall of the recess part is defined by at least one curvature; preferably, an acute angle is formed between a tangent of any point at the inner wall of the recess part and an axis of the cylindrical body.

14. An ear temperature measurement device, **characterized in that**, comprising an ear temperature measurement apparatus and the sheath according to any one of claims 1-13, wherein the ear temperature measurement apparatus comprises:
a probe, which is configured to measure an ear temperature, wherein the probe comprises a probe housing which is provided with a proximal end and a distal end for protruding into an ear of a measured object, wherein the sheath is detachably sheathed at the probe housing;
an engaging element, which is engaged with the engaging fitting part of the sheath to engage the sheath onto the probe; and
a control mechanism, which is connected with the engaging element to control the engaging element to move toward the proximal end of the probe housing; wherein when the engaging element moves toward the proximal end of the probe housing, the engaging element pulls the sheath to deform toward the proximal end of the probe housing until the engaging element disengages from the sheath, thereby ejecting the sheath toward the distal end of the probe housing.

15. The ear temperature measurement device according to claim 14, **characterized in that**, the probe housing prevents heat transfer, and the probe further comprises a heat conduction element and an infrared temperature sensor, which are installed inside the probe housing;
wherein the distal end of the probe housing is provided with an opening, the infrared temperature sensor is configured to receive infrared radiation from a part to be measured through the opening to measure a temperature thereof, and the infrared temperature sensor comprises a first end which faces the opening and a second end which faces away from the first end;
the heat conduction element is connected with the probe housing at the opening and extends from the opening to the second end of the infrared temperature sensor, so as to be thermally connected with the second end of the infrared temperature sensor to form a heat transfer path from the opening of the probe housing to the second end of the infrared temperature sensor, wherein heat at the opening is transmitted to the second end of the infrared temperature sensor through the heat transfer path, so as to reduce a temperature difference between the first end and the second end of the infrared temperature sensor.
